# EUROPEAN PATENT SPECIFICATION

(11) **EP 4 560 698 B1**
(45) Date of publication and mention of the grant of the patent: **23.09.2026**
(21) Application number: 24213974.9
(22) Date of filing: 19.11.2024
(51) Int. Cl.: H10W 40/00, H10W 40/22, H10W 42/00, H10W 70/02, H10W 76/15, H10W 40/60

(54) **METHOD AND APPARATUS FOR DETERMINING INTERFACE SHAPE OF HEAT DISSIPATION COVER OF CHIP**
VERFAHREN UND VORRICHTUNG ZUR BESTIMMUNG DER SCHNITTSTELLENFORM EINER WÄRMEABLEITUNGSABDECKUNG EINES CHIPS
PROCÉDÉ ET APPAREIL POUR DÉTERMINER LA FORME D'INTERFACE D'UN COUVERCLE DE DISSIPATION DE CHALEUR D'UNE PUCE

(30) Priority: 21.11.2023 CN 202311560672
(43) Date of publication of application: 28.05.2025
(73) Proprietor: Beijing Zitiao Network Technology Co., Ltd., Beijing 100190 (CN)
(72) Inventor: DUAN, Pengbo, Beijing, 100028 (CN); LI, Chaochao, Beijing, 100028 (CN); LI, Zhongyong, Beijing, 100028 (CN); HUANG, Haixin, Beijing, 100028 (CN); SUN, Yongfu, Beijing, 100028 (CN); WANG, Jian, Beijing, 100028 (CN)
(74) Representative: Marks & Clerk LLP

(56) References cited:
- US-A1- 2007 020 813
- US-A1- 2008 157 345
- US-A1- 2019 103 326
- US-A1- 2022 102 288

## Description

### FIELD

Example embodiments of the present disclosure generally relate to the technical field of chip packaging, in particular to a method, an apparatus and a computer-readable storage medium for determining an interface shape of a heat dissipation cover of a chip, and a package and an electronic assembly including a heat dissipation cover with the determined interface shape.

### BACKGROUND

In the packaging process of a chip, the chip needs to be welded to a substrate, and a heat dissipation cover is adhered to the substrate through an adhesive, to cause the heat dissipation cover to be attached to a surface of the chip through a thermal interface material, so that the heat generated in the operation of the chip is taken away. After the packaging process is completed, the entire package may be welded onto a printed circuit board (PCB for short). Before being packaged, the surfaces of the conventional chip, the heat dissipation cover, and the substrate are flat. However, since the thermal expansion coefficient of each component is inconsistent, in the packaging process of the chip or in the process of welding the package onto the PCB, each component, especially the heat dissipation cover, can warp, which can affect the contact effect between a heat sink and the heat dissipation cover.

US 2007/020813 A1 discloses a device and method for designing and manufacturing an integrated heat spreader so that the integrated heat spreader will have a flat surface on which to mount a heat sink after being assembled into a package and exposed to the heat of a die. This device and method for designing and manufacturing an integrated heat spreader would generate a heat spreader that would be built compensate for deformations resulting from physical manipulation during assembly thermal gradients during operation and differing rates of expansion and contraction of the package materials coupled with multiple package assembly steps at elevated temperatures so that one surface of the integrated heat spreader would have a flat shape.

US 2008/157345 A1 discloses an electronic assembly including a die coupled to a substrate, the die including a curved surface. The assembly also includes a thermal interface material having a first curved surface and a second curved surface, the first curved surface coupled to the curved surface of the die. The assembly also includes a heat spreader having a curved surface, wherein the curved surface of the heat spreader is coupled to the second curved surface of the thermal interface material.

US 2019/103326 A1 discloses a silicon layer, where the silicon layer includes a profile and a thermal conductor coupled to the silicon layer, where the thermal conductor includes one or more residual stresses. The thermal conductor is modified based on the one or more residual stress such that when pressure is applied to the thermal conductor, a profile of the thermal conductor at least approximately matches the profile of the silicon layer. In an example, the thermal conductor is modified by removing material from one or more areas of the thermal conductor and the thermal conductor is coupled to the silicon layer by one or more pressure inducing mechanisms.

US 2022/102288 A1 discloses a semiconductor device includes a circuit substrate, a semiconductor package, and a metallic cover. The semiconductor package is disposed on the circuit substrate. The metallic cover is disposed over the semiconductor package and over the circuit substrate. The metallic cover comprises a cap and outer flanges. The cap overlies the semiconductor package. The outer flanges are disposed at edges of the cap, are connected with the cap, and extend towards the circuit substrate. A region of the bottom surface of the cap has a curved profile matching a warpage profile of the semiconductor package and the circuit substrate, and the region having the curved profile extends over the semiconductor package.

### SUMMARY

In a first aspect of the present disclosure, there is provided a method for determining an interface shape of a heat dissipation cover of a chip, including: determining a first plane warping degree of a flat reference heat dissipation cover after a welding process related to a chip; adjusting an interface shape of the reference heat dissipation cover based on the first plane warping degree, to cause the adjusted interface shape to be opposite to an interface shape reflected by the first plane warping degree, where the interface shape is a shape of a side surface of the heat dissipation cover to be coupled with a heat sink; determining a second plane warping degree of the reference heat dissipation cover with the adjusted interface shape after the welding process; and in response to the second plane warping degree satisfying a predetermined condition, determining the adjusted interface shape as an interface shape of the heat dissipation cover.

In a second aspect of the present disclosure, there is provided an apparatus for determining an interface shape of a heat dissipation cover of a chip, including: a first warping degree determining module, configured to determine a first plane warping degree of a flat reference heat dissipation cover after a welding process related to a chip; an interface shape adjusting module, configured to adjust an interface shape of the reference heat dissipation cover based on the first plane warping degree, to cause the adjusted interface shape to be opposite to an interface shape reflected by the first plane warping degree, where the interface shape is a shape of a side surface of the heat dissipation cover to be coupled with a heat sink; a second warping degree determining module, configured to determine a second plane warping degree of the reference heat dissipation cover with the adjusted interface shape after the welding process; and an interface shape determining module, configured to determine the adjusted interface shape as an interface shape of the heat dissipation cover in response to the second plane warping degree satisfying a predetermined condition.

In a third aspect of the present disclosure, there is provided an electronic device, including: at least one processing unit; and at least one memory coupled to the at least one processing unit and storing instructions executed by the at least one processing unit, the instructions, when executed by the at least one processing unit, causing the apparatus to perform the method according to the first aspect of the present disclosure.

In a fourth aspect of the present disclosure, there is provided a computer-readable storage medium having a computer program stored thereon, the computer program being executable by a processor to implement the method according to the first aspect of the present disclosure.

In a fifth aspect of the present disclosure, there is provided a heat dissipation cover of a chip including an interface shape determined by the method of the first aspect of the present disclosure.

In a sixth aspect of the present disclosure, there is provided a package including the heat dissipation cover of the fifth aspect of the present disclosure, wherein the interface shape of the heat dissipation cover is non-flat before being packaged, and is flat after being packaged.

In a seventh aspect of the present disclosure, there is provided an electronic assembly including a printed circuit board and a package, the package welded onto the printed circuit board, the package including the heat dissipation cover of the fifth aspect of the present disclosure, wherein an interface shape of the heat dissipation cover is non-flat before the package being welded onto the printed circuit board, and is flat after the package being welded onto the printed circuit board.

### BRIEF DESCRIPTION OF THE DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of a package in which embodiments of the present disclosure can be implemented;
FIG. 2 illustrates a schematic diagram of an electronic assembly in which embodiments of the present disclosure can be implemented;
FIG. 3 illustrates an example warpage of the heat dissipation cover after the packaging process;
FIG. 4 shows a flowchart of a process for determining an interface shape of a heat dissipation cover of a chip according to an embodiment of the present disclosure;
FIG. 5 is a schematic structural diagram of a heat dissipation cover according to an embodiment of the present disclosure;
FIG. 6 illustrates a block diagram of an apparatus for determining an interface shape of a heat dissipation cover of a chip according to an embodiment of the present disclosure; and
FIG. 7 illustrates a block diagram of a device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure.

In the description of the embodiments of the present disclosure, the terms "including" and the like should be understood as an openness, i.e., "including but not limited to". The term "based on" should be understood as "based at least in part on". The terms "an embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

As mentioned briefly above, since the thermal expansion coefficients of the components such as the chip, the heat dissipation cover and the substrate and the like are inconsistent, in the packaging process of the chip or in the process of welding the package onto the PCB, each component, especially the heat dissipation cover, can wrap, which can affect the contact effect between a heat sink and the heat dissipation cover.

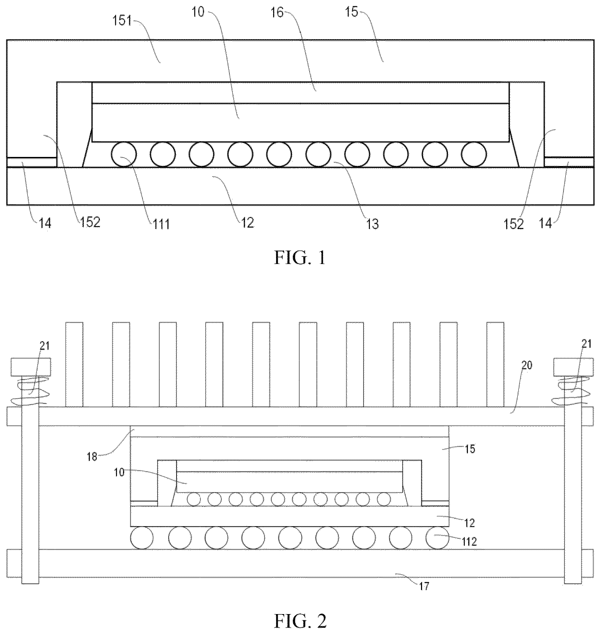

FIG. 1 illustrates a schematic diagram of a package in which an embodiment of the present disclosure can be implemented, and FIG. 2 illustrates a schematic diagram of an electronic assembly in which an embodiment of the present disclosure can be implemented.

As shown in FIG. 1, the package described herein generally includes a chip 10, a first ball grid array 111, a substrate 12, an underfill material 13, an adhesive 14, a heat dissipation cover 15, and a first thermal interface material 16. The first ball grid array 111 is disposed between the chip 10 and the substrate 12 to weld the chip 10 onto the substrate 12. The chip 10 may be welded onto the substrate 12 by reflow soldering or pressure welding. The underfill material 13 fills spaces between the chip 10 and the substrate 12 other than the first ball grid array 111. The heat dissipation cover 15 includes a top cover 151 and a side cover 152. The top cover 151 is coupled to the chip 15 by the first thermal interface material 16, and the side cover 152 is adhered to the substrate 12 by the adhesive 14. So far, a package as shown in FIG. 1 is formed. During operation of the chip 10, heat generated by the chip 10 may be conducted to the heat dissipation cover 15 through the first thermal interface material 16.

As shown in FIG. 2, after the packaging is completed, the package shown in FIG. 1 may be welded onto a PCB 17 through a second ball grid array 112 by means of reflow soldering or the like. A spring screw 21 may then be employed to secure a heat sink 20 to the PCB 17. One side of the heat sink 20 is coupled to the heat dissipation cover 15 through a second thermal interface material 18, and the other side of the heat sink 20 is provided with fins. Most of the heat in the package may be transferred to the heat sink 20 through the second thermal interface material 18.

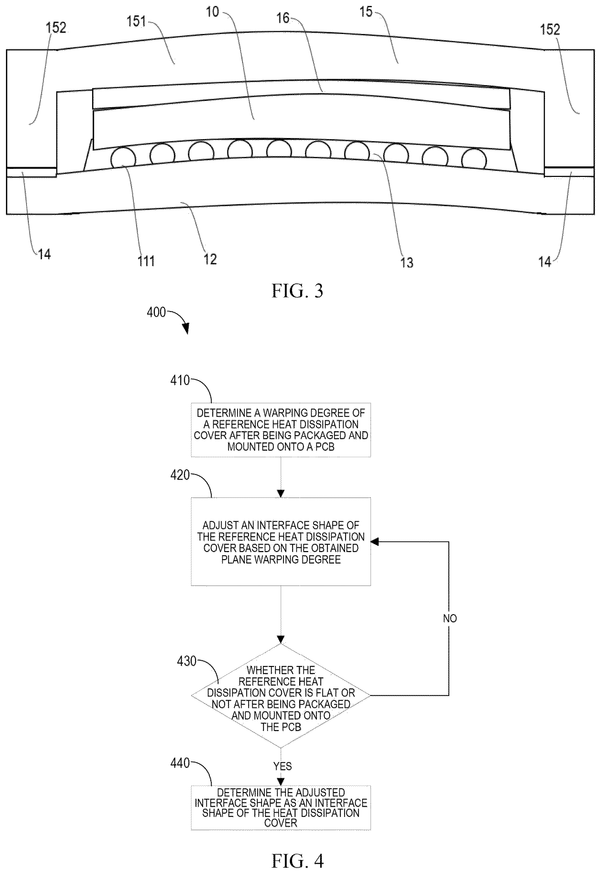

In the packaging process of the chip 10 or in the process of welding the package onto the PCB 17, since the thermal expansion coefficients of the components such as the chip 10, the heat dissipation cover 15 and the substrate 12 and the like are inconsistent, each component, especially the heat dissipation cover 15, can warp. Even if the surface of the incoming heat dissipation cover 15 is flat, the surface of the heat dissipation cover 15 may warp after undergoing the process of being packaged and mounted onto the PCB 17. As the area of the package increases, the warpage of the heat dissipation cover 15 also increases. FIG. 3 illustrates an example warpage of the heat dissipation cover 15 after the packaging process. As shown in FIG. 3, after the packaging process of the chip 10 is completed, the heat dissipation cover 15 and the substrate 12 warp. For example, a middle portion of the top cover 151 of the heat dissipation cover 15 protrudes upwardly.

The poor flatness of the heat dissipation cover 15 not only affects the coating effect of the second thermal interface material 18 but also affects the mounting pressure of the heat sink 20 to the package. Warpage of the heat dissipation cover 15 may cause the coverage rate of the second thermal interface material 18 to reach less than thermal design requirements. The design thickness of the second thermal interface material 18, such as silicone grease or the like, is usually 0.1 mm, and if the surface of the heat dissipation cover 15 warps by more than 0.1 mm, it may result in the second thermal interface material 18 not being able to completely fill the gap between the heat dissipation cover 15 and the heat sink 20 in some areas, thus resulting in the heat dissipation effect being less than the thermal design requirement. Further, the heat sink 20 is typically secured to the PCB 17 by the spring screw 21. The pressure provided by the spring screw 21 is a certain amount, and when the heat dissipation cover 15 warps, the local pressure on the warped heat dissipation cover 15 may be significantly increased, much greater than the pressure on the heat dissipation cover 15 in the flat state, which may bring a risk of poor reliability of the chip 10. In addition, the warped heat dissipation cover 15 may also lead to a tilted mounting of the heat sink 20, which also greatly increases the risk of poor reliability of the chip 20.

In some cases, after the package being welded to the PCB 17, the surface of the warped heat dissipation cover 15 may be machined by using a machine tool, to cause the surface of the heat dissipation cover 15 to be flat. However, the package and PCB 17 may be affected by mechanical stress during machining, which may lead to the problems of poor mechanical reliability.

FIG. 4 illustrates a flowchart of a process 400 for determining an interface shape of a heat dissipation cover of a chip according to an embodiment of the present disclosure.

At block 410, determining a first plane warping degree of a flat reference heat dissipation cover after a welding process related to a chip. The first plane warping degree may reflect the flatness of the reference heat dissipation cover. As described above, in the packaging process of the chip 10, the chip 10 may be welded onto the substrate 12 by reflow soldering or pressure welding, and after the packaging process is completed, the package may be welded onto a PCB 17 through a second ball grid array 112 by means of reflow soldering or the like. The welding process described herein related to the chip may include one of the above two welding processes, i.e., welding the chip onto the substrate to form the package or welding the package onto a printed circuit board.

In some embodiments, the first plane warping degree may be determined by at least one of a simulation, a trial, or a theoretical calculation. In the simulation manner, the structural model of the reference heat dissipation cover may be established first, wherein the structural model may include size information and position information and the like. The physical variables to cause structural deformation are then input into the structural model, such as thermal expansion coefficient, elastic modulus, and the like. After the simulation, the first plane warping degree of the reference heat dissipation cover can be obtained. In the trial manner, the actual reference heat dissipation cover can be packaged or mounted onto the PCB after being packaged, and the warping degree of the reference heat dissipation cover can be measured by a shadow Moiré method or by measuring the surface height difference, so that the first plane warping degree is obtained. In the theoretical calculation manner, the first plane warping degree may be determined based on physical variables such as thermal expansion coefficient, elastic modulus and the like that can cause structural deformation.

At block 420, adjusting an interface shape of the reference heat dissipation cover based on the obtained first plane warping degree, to cause the adjusted interface shape to be opposite to an interface shape reflected by the first plane warping degree. The interface shapes described herein refer to the shape of a side surface of the heat dissipation cover to be coupled with the heat sink. For example, in a case where the reference heat dissipation cover warps upwardly in the middle in the manner shown in FIG. 3 after the packaging process, the first plane warping degree can represent the warpage form to reflect the interface shape of the reference heat dissipation cover after the packaging process. According to the interface shape reflected by the first plane warping degree, the interface shape of the reference heat dissipation cover can be adjusted, to cause the adjusted interface shape to be opposite to the interface shape reflected by the first plane warping degree. For example, in a case where the reference heat dissipation cover warps upwardly in the middle in the manner shown in FIG. 3 after the packaging process, the intermediate position of the adjusted interface shape may be recessed downwardly, to cause the interface shape of the reference heat dissipation cover to be opposite to the interface shape reflected by the first plane warping degree.

In other embodiments, the reference heat dissipation cover may have other forms of warpage after the packaging process, such as W-shaped warpage, middle-downward warpage, etc. In such embodiments, the first plane warping degree can also represent these warpage forms to reflect the interface shape of the reference heat dissipation cover after the packaging process. In the case where the reference heat dissipation cover has the W-shaped warpage after the packaging process, the adjusted interface shape may be an inverted W shape, to cause the interface shape of the reference heat dissipation cover to be opposite to the interface shape reflected by the first plane warping degree. In the case where the reference heat dissipation cover warps downwardly in the middle after the packaging process, the intermediate position of the adjusted interface shape may protrude upwardly, to cause the interface shape of the reference heat dissipation cover to be opposite to the interface shape reflected by the first plane warping degree.

In some embodiments, adjusting the interface shape of the reference heat dissipation cover includes: performing reverse machining on the reference heat dissipation cover or modifying a mold of the heat dissipation cover. By performing reverse machining on the reference heat dissipation cover, it is possible to cause the interface shape of the heat dissipation cover to be opposite to the interface shape reflected by the first plane warping degree. By modifying the mold of the heat dissipation cover, it is possible to cause the interface shape of the heat dissipation cover to be manufactured to be opposite to the interface shape reflected by the first plane warping degree.

Similarly, in the case where the package is welded to the PCB, the interface shape of the reference heat dissipation cover can also be adjusted based on the obtained first plane warping degree, to cause the adjusted interface shape to be opposite to the interface shape reflected by the first plane warping degree.

At 430, determining a second plane warping degree of the reference heat dissipation cover with the adjusted interface shape after the welding process for determining whether the reference heat dissipation cover with the adjusted interface shape is flat or not after the packaging process or after mounting the package onto the PCB. The second plane warping degree may be determined by at least one of a trial or a simulation. In the trial manner, the second plane warping degree may be determined by a shadow Moiré method or by measuring the surface height difference.

At block 440, in response to the second plane warping degree satisfying a predetermined condition, determining the adjusted interface shape as an interface shape of the heat dissipation cover. The second plane warping degree satisfies a predetermined condition indicating that the flatness of the reference heat dissipation cover is sufficiently high after the packaging process or after mounting the package onto the PCB. In this case, determining the adjusted interface shape as the interface shape of the heat dissipation cover can solve the problem of warpage of the heat sink from the source.

In some embodiments, as shown in FIG. 4, in response to the second plane warping degree not satisfying the predetermined condition, the process 400 returns from block 430 to block 420 to continue the optimization. Specifically, the process 400 may include: adjusting the interface shape of the reference heat dissipation cover based on the second plane warping degree, to cause an interface shape opposite to an interface shape reflected by the second plane warping degree to be attached to the adjusted interface shape; determining a third plane warping degree of the reference heat dissipation cover with the readjusted interface shape after the welding process; in response to the third plane warping degree satisfying the predetermined condition, determining the readjusted interface shape as an interface shape of the heat dissipation cover; and in response to the third plane warping degree not satisfying the predetermined condition, adjusting the interface shape of the reference heat dissipation cover based on the third plane warping degree. By performing the cycle optimization, it is ultimately possible to make the flatness of the heat dissipation cover sufficiently high after the packaging process or after mounting the package onto the PCB.

According to an embodiment of the present disclosure, by adjusting the interface shape of the heat dissipation cover, it is possible to make the surface of the heat dissipation cover be a flat state after the packaging process or after mounting the package onto the PCB. Therefore, the coverage rate of the second thermal interface material can theoretically reach 100%, and the local maximum pressure of the surface of the package can also be effectively improved, so that the overall heat dissipation level and reliability are effectively improved.

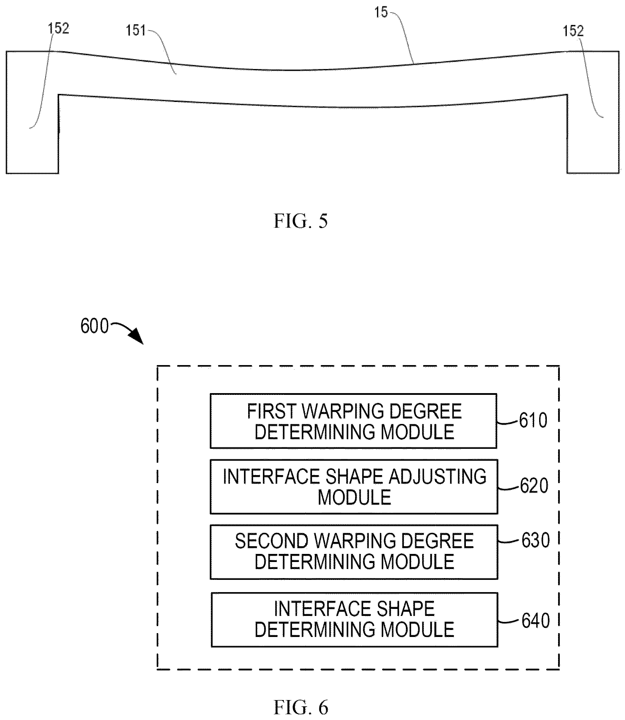

Embodiments of the present disclosure also provide a heat dissipation cover of a chip, and the heat dissipation cover has the interface shape determined by the process 400 as described above. FIG. 5 illustrates a schematic structural diagram of the heat dissipation cover according to an embodiment of the present disclosure. As shown in FIG. 5, the heat dissipation cover 15 initially has an non-flat interface shape determined by process 400 as described above. After the packaging process or after mounting the package onto the PCB, the interface shape of the heat dissipation cover 15 can be flat.

Embodiments of the present disclosure also provide a package including a heat dissipation cover 15 according to an embodiment of the present disclosure, wherein the interface shape of the heat dissipation cover 15 is non-flat before the packaging process, and is flat after the packaging process.

FIG. 6 illustrates a block diagram of an apparatus 600 for determining an interface shape of a heat dissipation cover of a chip according to an embodiment of the present disclosure. The apparatus 600 may be configured to perform the process 400 shown in FIG. 4 described above.

As shown in FIG. 6, the apparatus 600 generally includes: a first warping degree determining module 610 configured to determine a first plane warping degree of a flat reference heat dissipation cover after a welding process related to a chip; an interface shape adjusting module 620 configured to adjust an interface shape of the reference heat dissipation cover based on the first plane warping degree, to cause the adjusted interface shape to be opposite to an interface shape reflected by the first plane warping degree; a second warping degree determining module 630 configured to determine a second plane warping degree of the reference heat dissipation cover with the adjusted interface shape after the welding process; and an interface shape determining module 640 configured to determine the adjusted interface shape as an interface shape of the heat dissipation cover in response to the second plane warping degree satisfying a predetermined condition.

In some embodiments, the first plane warping degree is determined by at least one of a trial, a simulation, or a theoretical calculation.

In some embodiments, the welding process includes welding the chip onto a substrate to form a package or welding the package onto a printed circuit board.

In some embodiments, the second plane warping degree is determined by at least one of a trial or a simulation.

In some embodiments, the interface shape adjusting module 620 is further configured to adjust the interface shape of the reference heat dissipation cover based on the second plane warping degree in response to the second plane warping degree not satisfying the predetermined condition, to cause an interface shape opposite to an interface shape reflected by the second plane warping degree to be attached to the adjusted interface shape; the second warping degree determining module 630 is further configured to determine a third plane warping degree of the reference heat dissipation cover with the readjusted interface shape after the welding process; the interface shape determining module 640 is further configured to determine the readjusted interface shape as the interface shape of the heat dissipation cover in response to the third plane warping degree satisfying the predetermined condition; and the interface shape adjusting module 620 is further configured to adjust the interface shape of the reference heat dissipation cover based on the third plane warping degree in response to the third plane warping degree not satisfying the predetermined condition.

In some embodiments, the interface shape adjustment module 620 adjusts the interface shape of the reference heat dissipation cover by: performing reverse machining on the reference heat dissipation cover or modifying a mold of the heat dissipation cover.

An embodiment of the present disclosure further provides an electronic assembly including a printed circuit board and a package, the package is welded to the printed circuit board, the package including the heat dissipation cover 15 according to an embodiment of the present disclosure, wherein the interface shape of the heat dissipation cover 15 is non-flat before the package is welded to the printed circuit board, and is flat after the package is welded to the printed circuit board.

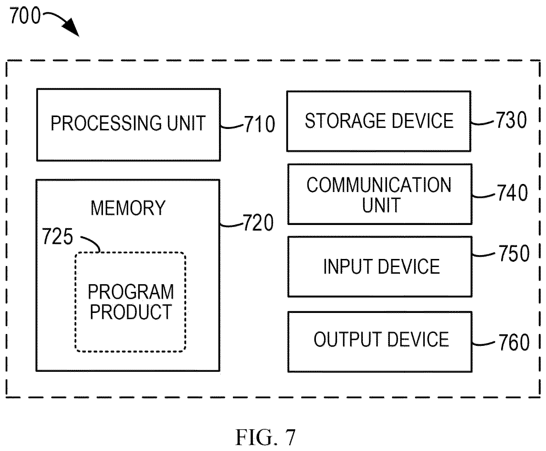

FIG. 7 illustrates a block diagram illustrating an electronic device 700 in which one or more embodiments of the present disclosure may be implemented. It should be understood that the electronic device 700 illustrated in FIG. 7 is merely exemplary and should not constitute any limitation on the functionality and scope of the embodiments described herein. The electronic device 700 shown in FIG. 7 may be configured to implement the process 400 shown in FIG. 4.

As shown in FIG. 7, the electronic device 700 is in the form of a general-purpose electronic device. Components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and capable of performing various processes according to programs stored in the memory 720. In multiprocessor systems, multiple processing units execute computer-executable instructions in parallel to improve parallel processing capabilities of electronic device 700.

Electronic device 700 typically includes a plurality of computer storage medium. Such medium may be any available medium accessible by the electronic device 700, including, but not limited to, volatile and non-volatile medium, detachable and non-detachable medium. The memory 720 may be a volatile memory (e.g., a register, cache, Random Access Memory (RAM)), a non-volatile memory (e.g., a Read-Only Memory (ROM), Electrically Erasable Programmable Read-Only Memory (EEPROM), or a flash memory), or some combination thereof. The storage device 730 may be any detachable or non-detachable medium and may include a machine-readable medium, such as a flash memory drive, magnetic disk, or any other medium, which may be used for storing information and/or data (e.g., training data for training) and may be accessed in electronic device 700.

The electronic device 700 may further include additional detachable/non-detachable, volatile/non-volatile memory medium. Although not shown in FIG. 7, it is possible to provide a magnetic disk drive for reading from or writing into a detachable, non-volatile magnetic disk (e.g., a "floppy disk") and an optical disk drive for reading from or writing into a detachable, non-volatile optical disk. In such cases, each drive may be connected to a bus (not shown) via one or more data medium interfaces. The memory 720 may include a computer program product 725 having one or more program modules configured to perform various methods or actions of various embodiments of the present disclosure.

The communication unit 740 is configured to communicate with a further electronic device via a communication medium. Additionally, the functions of components of the electronic device 700 may be implemented by a single computing cluster or multiple computing machines that can communicate via communication connections. Thus, the electronic device 700 may operate in a networked environment using a logical connection with one or more other servers, networked personal computers (PCs), or another network node.

The input device 750 may be one or more input devices such as a mouse, a keyboard, a tracking ball, or the like. The output device 760 may be one or more output devices, such as a display, a loudspeaker, a printer, or the like. By means of the communication unit 740, the electronic device 700 can further communicate with one or more external devices (not shown) such as the storage devices and display devices, with one or more devices enabling the user to interact with the electronic device 700, or any device (e.g., a network card, a modem, etc. ) enabling the electronic device 700 to communicate with one or more other electronic devices, if required. Such communication may be performed via input/output (I/O) interfaces (not shown).

According to example implementations of the present disclosure, an electronic device is provided. The electronic device includes at least one processing unit and at least one memory. The at least one memory is coupled to the at least one processing unit and stores instructions for execution by the at least one processing unit, the instructions, when executed by the at least one processing unit, cause the apparatus to perform the methods described above.

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce apparatus to implement the functions/acts specified in one or more blocks of the flowchart and/or block diagram. These computer-readable program instructions may also be stored in a computer-readable storage medium, such instructions cause the computer, programmable data processing apparatus, and/or other devices to operate in a particular manner, such that the computer-readable medium storing instructions includes an article of manufacture including instructions to implement various aspects of the functions / acts specified in one or more blocks of the flowchart and/or block diagram.

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in one or more blocks of the flowchart and/or block diagram.

The flowchart and block diagrams in the drawings show architecture, functionality, and operation of possible implementations of systems, methods, and computer program products according to various implementations of the present disclosure. In this regard, each block in the flowchart or block diagram may represent a module, a program segment, or a portion of instruction, which includes one or more executable instructions for implementing the specified logical function. In some alternative implementations, the functions noted in the blocks may also occur in a different order than noted in the drawings. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. The scope of the present disclosure is defined by the claims. The selection of the terms used herein is intended to best explain the principles of the implementations, practical applications, or improvements to techniques in the marketplace, or to enable others of ordinary skill in the art to understand the various implementations disclosed herein.

## Claims

1. A method (400) for determining an interface shape of a heat dissipation cover of a chip, comprising:
determining (410) a first plane warping degree of a flat reference heat dissipation cover after a welding process related to a chip;
adjusting (420) an interface shape of the reference heat dissipation cover based on the first plane warping degree, to cause the adjusted interface shape to be opposite to an interface shape reflected by the first plane warping degree, wherein the interface shape is a shape of a side surface of the heat dissipation cover to be coupled with a heat sink;
determining a second plane warping degree of the reference heat dissipation cover with the adjusted interface shape after the welding process; and
in response to the second plane warping degree satisfying a predetermined condition, determining (440) the adjusted interface shape as an interface shape of the heat dissipation cover.

2. The method (400) of claim 1, wherein the first plane warping degree is determined by at least one of a trial, a simulation, or a theoretical calculation.

3. The method (400) of claim 1, wherein the welding process comprises welding the chip onto a substrate to form a package or welding the package onto a printed circuit board.

4. The method (400) of claim 1, wherein the second plane warping degree is determined by at least one of a trial or a simulation.

5. The method (400) of claim 1, further comprising:
in response to the second plane warping degree not satisfying the predetermined condition, adjusting the interface shape of the reference heat dissipation cover based on the second plane warping degree, to cause an interface shape opposite to an interface shape reflected by the second plane warping degree to be attached to the adjusted interface shape;
determining a third plane warping degree of the reference heat dissipation cover with the readjusted interface shape after the welding process;
in response to the third plane warping degree satisfying the predetermined condition, determining the readjusted interface shape as an interface shape of the heat dissipation cover; and
in response to the third plane warping degree not satisfying the predetermined condition, adjusting the interface shape of the reference heat dissipation cover based on the third plane warping degree.

6. The method (400) of claim 1, wherein adjusting the interface shape of the reference heat dissipation cover comprises: performing reverse machining on the reference heat dissipation cover or modifying a mold of the heat dissipation cover.

7. An apparatus (600) for determining an interface shape of a heat dissipation cover of a chip, comprising:
a first warping degree determining module (610), configured to determine a first plane warping degree of a flat reference heat dissipation cover after a welding process related to a chip;
an interface shape adjusting module (620), configured to adjust an interface shape of the reference heat dissipation cover based on the first plane warping degree, to cause the adjusted interface shape to be opposite to an interface shape reflected by the first plane warping degree, wherein the interface shape is a shape of a side surface of the heat dissipation cover to be coupled with a heat sink;
a second warping degree determining module (630), configured to determine a second plane warping degree of the reference heat dissipation cover with the adjusted interface shape after the welding process; and
an interface shape determining module (640), configured to determine the adjusted interface shape as an interface shape of the heat dissipation cover in response to the second plane warping degree satisfying a predetermined condition.

8. An electronic device (700), comprising: at least one processing unit; and
at least one memory (720) coupled to the at least one processing unit (710) and storing instructions executed by the at least one processing unit (710), the instructions, when executed by the at least one processing unit (710), causing the electronic device (700) to perform the method of any one of claims 1 to 6.

9. A computer-readable storage medium having a computer program stored thereon, the computer program being executable by a processor to implement the method of any one of claims 1 to 6.

10. A heat dissipation cover (15) of a chip (10) comprising an interface shape determined by the method of any one of claims 1 to 6.

11. A package comprising the heat dissipation cover (15) of claim 10, wherein the interface shape of the heat dissipation cover (15) is non-flat before being packaged and is flat after being packaged.

12. An electronic assembly comprising a printed circuit board (17) and a package, the package welded onto the printed circuit board (17), the package comprising the heat dissipation cover (15) of claim 10, wherein an interface shape of the heat dissipation cover (15) is non-flat before the package being welded onto the printed circuit board (17), and is flat after the package being welded onto the printed circuit board (17).

## Patentansprüche

1. Verfahren (400) zum Bestimmen einer Grenzflächenform einer Wärmeableitungsabdeckung eines Chips, umfassend:
Bestimmen (410) eines ersten Ebenenverformungsgrades einer ebenen Referenz-Wärmeableitungsabdeckung nach einem mit dem Chip verbundenen Schweißprozess;
Anpassen (420) einer Grenzflächenform der Referenz-Wärmeableitungsabdeckung basierend auf dem ersten Ebenenverformungsgrad, sodass die angepasste Grenzflächenform einer durch den ersten Ebenenverformungsgrad widerspiegelten Grenzflächenform entgegengesetzt ist, wobei die Grenzflächenform eine Form einer Seitenfläche der mit einem Kühlkörper zu verbindenden Wärmeableitungsabdeckung darstellt;
Bestimmen eines zweiten Ebenenverformungsgrades der Referenz-Wärmeableitungsabdeckung mit der angepassten Grenzflächenform nach dem Schweißprozess; und
als Reaktion auf den zweiten Ebenenverformungsgrad, der eine vorgegebene Bedingung erfüllt, Bestimmen (440) der angepassten Grenzflächenform als eine Grenzflächenform der Wärmeableitungsabdeckung.

2. Verfahren (400) nach Anspruch 1, wobei der erste Ebenenverformungsgrad durch mindestens eines von einem Versuch, einer Simulation oder einer theoretischen Berechnung bestimmt wird.

3. Verfahren (400) nach Anspruch 1, wobei der Schweißprozess Aufschweißen des Chips auf ein Substrat zur Bildung eines Gehäuses oder Aufschweißen des Gehäuses auf eine Leiterplatte umfasst.

4. Verfahren (400) nach Anspruch 1, wobei der zweite Ebenenverformungsgrad durch mindestens eines von einem Versuch oder einer Simulation bestimmt wird.

5. Verfahren (400) nach Anspruch 1, weiter umfassend:
als Reaktion auf den zweiten Ebenenverformungsgrad, der die vorgegebene Bedingung nicht erfüllt, Anpassen der Grenzflächenform der Referenz-Wärmeableitungsabdeckung basierend auf dem zweiten Ebenenverformungsgrad, um zu bewirken, dass eine Grenzflächenform, die einer durch den zweiten Ebenenverformungsgrad widerspiegelten Grenzflächenform entgegengesetzt ist, an der angepassten Grenzflächenform angebracht wird;
Bestimmen eines dritten Ebenenverformungsgrades der Referenz-Wärmeableitungsabdeckung mit der neu angepassten Grenzflächenform nach dem Schweißprozess;
als Reaktion auf den dritten Ebenenverformungsgrad, der die vorgegebene Bedingung erfüllt, Bestimmen der neu angepassten Grenzflächenform als Grenzflächenform der Wärmeableitungsabdeckung; und
als Reaktion auf den dritten Ebenenverformungsgrad, der die vorgegebene Bedingung nicht erfüllt, Anpassen der Grenzflächenform der Referenz-Wärmeableitungsabdeckung basierend auf dem dritten Ebenenverformungsgrad.

6. Verfahren (400) nach Anspruch 1, wobei Anpassen der Grenzflächenform der Referenz-Wärmeableitungsabdeckung Folgendes umfasst: Durchführen einer Rückwärtsbearbeitung an der Referenz-Wärmeableitungsabdeckung oder Modifizieren einer Form der Wärmeableitungsabdeckung.

7. Einrichtung (600) zum Bestimmen einer Grenzflächenform einer Wärmeableitungsabdeckung eines Chips, umfassend:
ein Modul (610) zum Bestimmen eines ersten Verformungsgrades, das so konfiguriert ist, dass es einen ersten Ebenenverformungsgrad einer ebenen Referenz-Wärmeableitungsabdeckung nach einem mit einem Chip verbundenen Schweißprozess bestimmt;
ein Modul (620) zur Grenzflächenformanpassung, das so konfiguriert ist, dass es eine Grenzflächenform der Referenz-Wärmeableitungsabdeckung basierend auf dem ersten Ebenenverformungsgrad so anpasst, dass die angepasste Grenzflächenform einer durch den ersten Ebenenverformungsgrad widerspiegelten Grenzflächenform entgegengesetzt ist, wobei die Grenzflächenform eine Form einer Seitenfläche der Wärmeableitungsabdeckung ist, die mit einem Kühlkörper verbunden werden soll;
ein Modul (630) zum Bestimmen eines zweiten Verformungsgrades, das so konfiguriert ist, dass es einen zweiten Ebenenverformungsgrad der Referenz-Wärmeableitungsabdeckung mit der angepassten Grenzflächenform nach dem Schweißprozess bestimmt; und
ein Modul (640) zur Grenzflächenformbestimmung, das so konfiguriert ist, dass es die angepasste Grenzflächenform als eine Grenzflächenform der Wärmeableitungsabdeckung als Reaktion auf den zweiten Ebenenverformungsgrad bestimmt, der eine vorgegebene Bedingung erfüllt.

8. Elektronische Vorrichtung (700), umfassend: mindestens eine Verarbeitungseinheit; und
mindestens einen Speicher (720), der mit der mindestens einen Verarbeitungseinheit (710) verbunden ist und Anweisungen speichert, die von der mindestens einen Verarbeitungseinheit (710) ausgeführt werden, wobei die Anweisungen, wenn sie von der mindestens einen Verarbeitungseinheit (710) ausgeführt werden, bewirken, dass die elektronische Vorrichtung (700) das Verfahren nach einem der Ansprüche 1 bis 6 durchführt.

9. Computerlesbares Speichermedium, das ein Computerprogramm darauf gespeichert aufweist, wobei das Computerprogramm von einem Prozessor ausführbar ist, um das Verfahren nach einem der Ansprüche 1 bis 6 zu implementieren.

10. Wärmeableitungsabdeckung (15) eines Chips (10), die eine Grenzflächenform umfasst, die durch das Verfahren nach einem der Ansprüche 1 bis 6 bestimmt wird.

11. Gehäuse, das die Wärmeableitungsabdeckung (15) nach Anspruch 10 umfasst, wobei die Grenzflächenform der Wärmeableitungsabdeckung (15) vor dem Verpacken nicht eben ist und nach dem Verpacken eben ist.

12. Elektronische Baugruppe, umfassend eine Leiterplatte (17) und ein Gehäuse, wobei das Gehäuse auf die Leiterplatte (17) geschweißt ist, das Gehäuse die Wärmeableitungsabdeckung (15) nach Anspruch 10 umfasst, wobei eine Grenzfläche der Wärmeableitungsabdeckung (15) vor dem Aufschweißen des Gehäuses auf die Leiterplatte (17) nicht eben ist und nach dem Aufschweißen des Gehäuses auf die Leiterplatte (17) eben ist.

## Revendications

1. Procédé (400) de détermination d'une forme d'interface pour un couvercle de dissipation de chaleur d'une puce, comprenant :
la détermination (410) d'un premier degré de déformation plane d'un couvercle de dissipation de chaleur de référence plat après un processus de soudage lié à une puce ;
l'ajustement (420) d'une forme d'interface du couvercle de dissipation de chaleur de référence sur la base du premier degré de déformation plane, pour amener la forme d'interface ajustée à être opposée à une forme d'interface reflétée par le premier degré de déformation plane, dans lequel la forme d'interface est une forme d'une surface latérale du couvercle de dissipation de chaleur à coupler avec un dissipateur de chaleur ;
la détermination d'un deuxième degré de déformation plane du couvercle de dissipation de chaleur de référence avec la forme d'interface ajustée après le processus de soudage ; et
en réponse au deuxième degré de déformation plane satisfaisant une condition prédéterminée, la détermination (440) de la forme d'interface ajustée comme une forme d'interface du couvercle de dissipation de chaleur.

2. Procédé (400) selon la revendication 1, dans lequel le premier degré de déformation plane est déterminé par au moins un parmi un essai, une simulation ou un calcul théorique.

3. Procédé (400) selon la revendication 1, dans lequel le processus de soudage comprend le soudage de la puce sur un substrat pour former un boîtier ou le soudage du boîtier sur une carte de circuit imprimé.

4. Procédé (400) selon la revendication 1, dans lequel le deuxième degré de déformation plane est déterminé par au moins parmi un essai ou une simulation.

5. Procédé (400) selon la revendication 1, comprenant en outre :
en réponse au fait que le deuxième degré de déformation plane ne satisfait pas la condition prédéterminée, l'ajustement de la forme d'interface du couvercle de dissipation de chaleur de référence sur la base du deuxième degré de déformation plane, pour amener une forme d'interface opposée à une forme d'interface reflétée par le deuxième degré de déformation plane à être attachée à la forme d'interface ajustée ;
la détermination d'un troisième degré de déformation plane du couvercle de dissipation de chaleur de référence avec la forme d'interface réajustée après le processus de soudage ;
en réponse au troisième degré de déformation plane satisfaisant la condition prédéterminée, la détermination de la forme d'interface réajustée comme une forme d'interface du couvercle de dissipation de chaleur ; et
en réponse au troisième degré de déformation plane ne satisfaisant pas la condition prédéterminée, l'ajustement de la forme de l'interface du couvercle de dissipation de chaleur de référence sur la base du troisième degré de déformation plane.

6. Procédé (400) selon la revendication 1, dans lequel l'ajustement de la forme de l'interface du couvercle de dissipation de chaleur de référence comprend : la réalisation d'un usinage inverse sur le couvercle de dissipation de chaleur de référence ou la modification d'un moule du couvercle de dissipation de chaleur.

7. Appareil (600) de détermination d'une forme d'interface pour un couvercle de dissipation de chaleur d'une puce, comprenant :
un module de détermination de premier degré de déformation (610), configuré pour déterminer un premier degré de déformation plane d'un couvercle de dissipation de chaleur de référence plat après un processus de soudage lié à une puce ;
un module d'ajustement de forme d'interface (620), configuré pour ajuster une forme d'interface du couvercle de dissipation de chaleur de référence sur la base du premier degré de déformation plane, pour amener la forme d'interface ajustée à être opposée à une forme d'interface reflétée par le premier degré de déformation plane, dans lequel la forme d'interface est une forme d'une surface latérale du couvercle de dissipation de chaleur à coupler avec un dissipateur de chaleur ;
un module de détermination de deuxième degré de déformation (630), configuré pour déterminer un deuxième degré de déformation plane du couvercle de dissipation de chaleur de référence avec la forme d'interface ajustée après le processus de soudage ; et
un module de détermination de forme d'interface (640), configuré pour déterminer la forme d'interface ajustée comme une forme d'interface du couvercle de dissipation de chaleur en réponse au deuxième degré de déformation plane satisfaisant une condition prédéterminée.

8. Dispositif électronique (700), comprenant : au moins une unité de traitement ; et
au moins une mémoire (720), couplée à l'au moins une unité de traitement (710) et stockant des instructions exécutées par l'au moins une unité de traitement (710), les instructions, lorsqu'elles sont exécutées par l'au moins une unité de traitement (710), amenant le dispositif électronique (700) à réaliser le procédé selon l'une quelconque des revendications 1 à 6.

9. Support de stockage lisible par ordinateur sur lequel est stocké un programme informatique, le programme informatique étant exécutable par un processeur pour mettre en œuvre le procédé selon l'une quelconque des revendications 1 à 6.

10. Couvercle de dissipation de chaleur (15) d'une puce (10) comprenant une forme d'interface déterminée par le procédé selon l'une quelconque des revendications 1 à 6.

11. Boîtier comprenant le couvercle de dissipation de chaleur (15) selon la revendication 10, dans lequel la forme d'interface du couvercle de dissipation de chaleur (15) est non plate avant d'être conditionnée et est plate après avoir été conditionnée.

12. Ensemble électronique comprenant une carte de circuit imprimé (17) et un boîtier, le boîtier étant soudé sur la carte de circuit imprimé (17), le boîtier comprenant le couvercle de dissipation de chaleur (15) selon la revendication 10, dans lequel une forme d'interface du couvercle de dissipation de chaleur (15) est non plate avant que le boîtier soit soudé sur la carte de circuit imprimé (17) et est plate après que le boîtier est soudé sur la carte de circuit imprimé (17).
